**Europäisches Patentamt**

**European Patent Office**

**Office Européen des brevets**

(19)

(11) Veröffentlichungsnummer: **0 262 739 B1**

(12)

# EUROPÄISCHE PATENTSCHRIFT

(45) Veröffentlichungstag der Patentschrift:
02.01.91 Patentblatt 91/01

(51) Int. Cl.$^5$: **H02M 3/155, H02M 3/10**

(21) Anmeldenummer: **87201858.5**

(22) Anmeldetag: **29.09.87**

(54) Getakteter Gleichspannungswandler.

(30) Priorität: **02.10.86 DE 3633518**

(43) Veröffentlichungstag der Anmeldung:
**06.04.88 Patentblatt 88/14**

(45) Bekanntmachung des Hinweises auf die Patenterteilung:
**02.01.91 Patentblatt 91/01**

(84) Benannte Vertragsstaaten:
**DE FR GB NL**

(56) Entgegenhaltungen:
**EP-A- 0 048 934**
**DE-A- 2 359 555**
**US-A- 4 275 436**

(73) Patentinhaber: **Philips Patentverwaltung GmbH**
**Wendenstrasse 35 Postfach 10 51 49**
**D-2000 Hamburg 1 (DE)**
**DE**
Patentinhaber: **N.V. Philips' Gloeilampenfabrieken**
**Groenewoudseweg 1**
**NL-5621 BA Eindhoven (NL)**
**FR GB NL**

(72) Erfinder: **Lösel, Walter**
**Anemonenweg 11**
**D-8510 Fürth (DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1 (DE)**

## Beschreibung

Die Erfindung betrifft einen getakteten Gleichspannungswandler, bei dem die Spannung eines Ausgangs geregelt wird und eine ungeregelte Spannung an einen zweiten Ausgang durch Kopplung an ein induktives Speicherelement des Wandlers erzeugt wird.

Ein Gleichspannungswandler mit diesen Merkmalen ist z.B. in der europäischen Patentschrift mit der Veröffentlichungsnummer 0 048 934 beschrieben. Bei dem beschriebenen Gleichspannungswandler handelt es sich um Durchflußwandler mit Potentialtrennung. Der auch als induktives Speicherelement dienende Übertrager weist einen Sekundärkreis auf, in dem die Spannung für den Verbraucher nicht geregelt wird, sondern von einem anderen geregelten Sekundärkreis "mitgezogen" wird. Gewöhnlich werden solche ungeregelten und gegebenenfalls mit einem nachgeschalteten, einfachen Längsregler versehenen Anschlüsse für die Versorgung aktiver Bauteile der Regeleinrichtung des Wandlers verwendet.

Bei getakteten und mit einer Regeleinrichtung versehenen Gleichspannungswandlern kann bei geringer Last der sogenannte lückende Betrieb einsetzen, der dadurch charakterisiert ist, daß die Ströme durch induktive Speicherelemente des Wandlers vorübergehend Null werden. Im lückenden Betrieb wird nur wenig Energie von der Primär- auf die Sekundärseite des Wandlers übertragen. Das bedeutet u.a., daß die Teilzeit einer Periode des Schalttaktes, während der der Schalttransistor des Wandlers leitend ist, durch die Regeleinrichtung des Wandlers extrem klein oder gar zu Null gemacht wird. Da jedoch die Schalttransistoren wegen ihrer parasitären Kapazitäten entweder gar nicht oder für eine Mindestzeit leitend werden können (diese Mindestzeit liegt für bipolare Transistoren bei 200 ns und für MOS-Fets bei 100 ns), ergeben sich daraus für den lückenden Betrieb unter anderem folgende Nachteile :
Macht die Regeleinrichtung den Schalttransistor für eine oder mehrere Taktperioden gar nicht leitend, so bekommen die Schaltvorgänge ein anderes Frequenzspektrum ; es treten dann erheblich tiefere Frequenzen auf als beim Normalbetrieb. Daher erfüllen die Tiefpässe am Wandlereingang, die das Versorgungsnetz, an das der Wandler angeschlossen ist, vor Störungen schützen sollen, nicht mehr ihren Zweck. Außerdem können - wenn z.B. die Schaltfrequenz im Normalbetrieb bei 20 kHz liegt - die Schaltvorgänge hörbar werden. Wird der Schalttransistor geöffnet, so steigt - wegen der viel zu langen Mindestzeit - die Spannung am geregelten Ausgang wesentlich höher über ihren Sollwert an als im Normalbetrieb. Die Spannungsschwankungen sind daher im lückenden Betrieb erheblich größer als im Normalbetrieb.

Wegen dieser Nachteile ist nach Möglichkeit zu vermeiden, daß der Wandler in den lückenden Betrieb gerät. Nach der DE-PS 23 59 555 wird der lückende Betrieb bei Durchflußwandlern dadurch vermieden, daß Parallel zur sogenannten Freilaufdiode des Durchflußwandlers eine Grundlast - also ein Widerstand - geschaltet wird, und zwar mit Hilfe eines Schalters, der im Gegentakt zum Schalttransistor betätigt wird.

Aus US-A 4,275,436 ist ein als Durchflußwandler ausgebildeter Gleichspannungswandler bekannt, bei dem eine Grundlast mittels eines Transistors parallel zur Ausgangslast geschaltet wird, wenn der Wandler in den lückenden Betrieb gerät. Dabei wird der Transistor Komplementär zum Takt der Arbeitsfrequenz und abhängig vom Strom in der Speicherdrossel des Durchflußwandlers getaktet.

Der Erfindung liegt die Aufgabe zugrunde, durch Anschalten einer Grundlast für alle Typen von Wandlern mit den eingangs genannten Merkmalen den lückenden Betrieb zu vermeiden.

Diese Aufgabe wird dadurch gelöst, daß ein Schwellenwertdetektor dann über einen Schalter eine Grundlast an den Ausgang mit der geregelten Spannung anlegt, wenn die ungeregelte Spannung eine vorgegebene Schwelle unterschreitet.

Vorteilhafte Ausgestaltungen der Erfindung sind in den Unteransprüchen angegeben.

Anhand der Figuren und anhand von zwei Ausführungsbeispielen soll die Erfindung näher erläutert werden.

Es zeigen

Fig. 1 das Prinzipschaltbild eines Gleichspannungswandlers mit erfindungsgemäßen Merkmalen,

Fig. 2 eine erste Ausführungsform einer Anordnung zum Anschalten einer Grundlast und

Fig. 3 eine zweite Ausführungsform einer Anordnung zum Anschalten einer Grundlast.

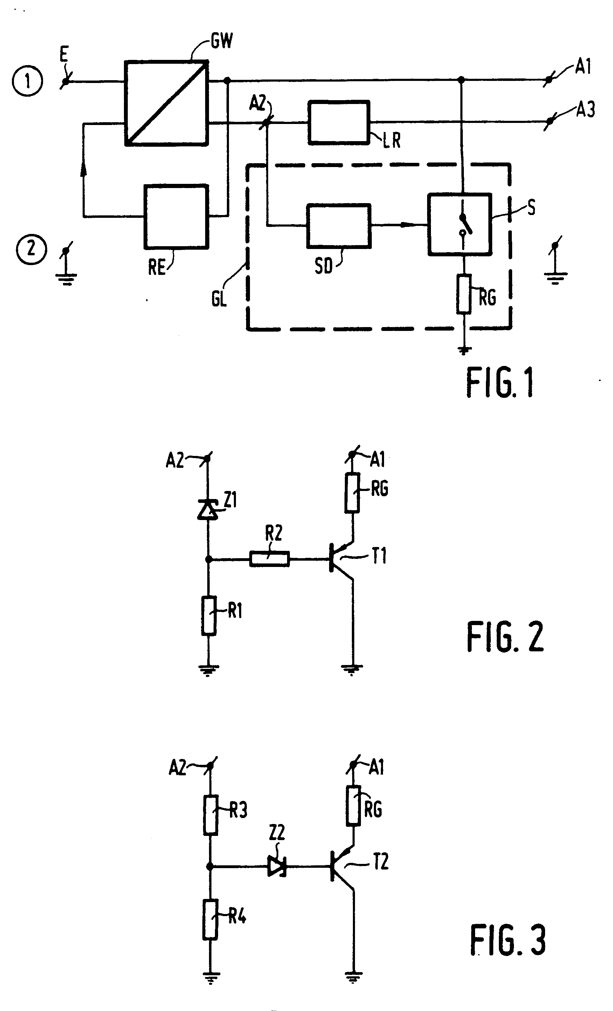

Im Beispiel nach Fig. 1 - einem Prinzipschaltbild - wird eine ungeregelte Spannung an den Eingang E eines Gleichspannungswandlers GW gelegt, der bis auf einen Schalttransistor nur passive Bausteine enthält. Vom Eingang E ist nur eine Klemme gezeigt ; die zweite nicht eingezeichnete Klemme liegt auf Bezugspotential. Entsprechendes gilt für alle anderen Ein- und Ausgänge, die im folgenden erwähnt werden. Der Gleichspannungswandler GW kann ein Durchflußwandler, ein Sperrwandler oder ein Gegentaktwandler sein. Die Spannung am Ausgang A1 des Wandlers wird durch eine Regeleinrichtung RE auf ihren Sollwert geregelt, und zwar dadurch, daß die Ein- und Ausschaltzeiten des nicht gezeigten Schalttransistors auf der Primärseite des Wandlers GW verändert werden. Der Wandler entzieht im Normalbetrieb einem Versorgungsnetz im Takt der Schaltfrequenz Energiebeträge, die in induktiven Speicherelementen - also in Drosseln oder Transformatoren - zwischengespeichert und dann über Ausgangskondensatoren an Verbraucher am Ausgang A1 übertragen werden.

Die Spannung am zweiten Ausgang A2 des Gleichspannungswandlers GW ist nicht geregelt. Bei diesem Ausgang handelt es sich um einen sogenannten "mitgezogenen" Ausgang, der induktiv an ein induktives Speicherelement des Gleichspannungswandlers GW gekoppelt ist, d.h., von einer Wicklung gespeist wird, die bei einem induktiven Speicherelement auf den gleichen Kern gewickelt ist. Bei einem Durchflußwandler mit Netztrennung erfolgt die Speisung des Ausgangs A2 entweder über eine gesonderte Sekundärwicklung des Trenntransformators oder über eine Wicklung, die an die Speicherdrossel des Wandlers gekoppelt ist. Die Spannung am mitgezogenen Ausgang A2 wird in der Schaltung nach Fig. 1 durch einen Längsregler LR nachgeregelt. Die Spannung vor dem Längsregler LR wird zur Versorgung von aktiven Elementen des Gleichspannungswandlers GW verwendet.

Zur Vermeidung des lückenden Betriebes des Gleichspannungswandlers GW ist eine als Grundlastregler GL bezeichnete Einheit vorgesehen. Sie besteht aus einem Schwellenwertdetektor SD, dessen Eingang mit dem ungeregelten Ausgang A2 des Wandlers GW verbunden ist. Mit dem Ausgangssignal des Schwellenwertdetektors SD wird ein steuerbarer Schalter S angesteuert, der - wenn er sich im leitenden Zustand befindet - die Klemmen des Ausgangs A1 über einen ohmschen Widerstand RG (Grundlast) miteinander verbindet.

Der Widerstand RG ist so bemessen, daß bei geschlossenem Schalter S (leitender Zustand) der lückende Betrieb des Wandlers GW mit Sicherheit ausgeschlossen ist.

Das Kriterium für das Einsetzen des lückenden Betriebes ist der Zusammenbruch der Spannung am nicht geregelten Ausgang A2 des Wandlers. Der Ausgang A2 ist immer (zumindest geringfügig) belastet, so daß eventuell vorhandene Glättungskondensatoren schnell entladen werden, wenn sie nicht ausreichend nachgeladen werden. Im lückenden Betrieb ist das ausreichende Nachladen nicht möglich, da wegen der zu Null werdenden Ströme in den induktiven Speicherelementen zeitweise überhaupt keine Induktionsspannung an den Enden der Wicklung auftritt, die den Ausgang A2 speist.

Bei dem in Fig. 1 gezeigten Beispiel tritt der Grundlastregler GL auch dann in Funktion, wenn der geregelte Ausgang A1 geringfügig belastet ist und durch zusätzliche Last am Ausgang A3 des Längsreglers LR die Spannung am Ausgang A2 zusammenbricht. Nach dem Anschalten der Grundlast RG steigt dann die Spannung am Ausgang A2 und damit auch die Spannung am Ausgang A3 des Längsreglers LR auf ihren anfänglichen Wert.

Fig. 2 zeigt eine Ausgestaltung des Grundlastreglers GL nach Fig. 1. Die Klemmen des Ausganges A2 werden über die Serienschaltung der Zenerdiode Z1 und eines Widerstandes R1 miteinander verbunden. Unterstellt ist der Fall, daß die nicht auf Bezugspotential liegenden Klemmen aller Ein- und Ausgänge auf höherem Potential liegen. Der Verbindungspunkt - gleichzeitig die Anode der Zenerdiode Z1 - von Diode Z1 und Widerstand R1 ist über einen Basiswiderstand R2 mit der Basis eines pnp-Transistors T1 verbunden. Sein Kollektor ist auf Bezugspotential gelegt und sein Emitterwiderstand ist die Grundlast RG. Die Serienschaltung des Widerstandes RG mit der Kollektor-Emitter-Strecke des Transistors T1 verbindet die beiden Klemmen des geregelten Ausganges A1 miteinander.

Sinkt die Spannung am Ausgang A2 unter die von der Zenerdiode Z1 festgelegte Schwelle, so wird die Basis des Transistors T1 auf Bezugspotential gelegt und der Transistor T1 damit geöffnet. Die Grundlast RG ist dann an den Ausgang A1 gelegt. Steigt die Spannung am Ausgang A2 wieder an, wird der Transistor gesperrt und die Grundlast damit vom Ausgang A1 getrennt.

Eine Variante des in Fig. 2 gezeigten Grundlastreglers GL ist in Fig. 3 abgebildet. Die Serienschaltung der Grundlast RG mit der Kollektor-Emitter-Strecke eines pnp-Transistors T2 verbindet wiederum die beiden Klemmen des geregelten Ausganges A1 miteinander. Die Basis des Transistors ist über eine Zener-Diode Z2 mit dem Mittenabgriff eines ohmschen Spannungsteilers R3, R4 verbunden, der zwischen den Klemmen des Ausgangs A2 liegt. Die Diode Z2 ist so gepolt, daß ihre Kathode mit der Basis des Transistors T2 verbunden ist. Sinkt die Spannung am Ausgang A2 unter eine von der Diode Z2 festgelegte Schwelle, so wird die Diode Z2 leitend und die Basis des Transistors T2 auf Bezugspotential gelegt ; damit ist auch der Transistor T2 leitend und die Grundlast RG wirksam. Bei hohen Spannungen am Ausgang A2 ist der Transistor T2 gesperrt und die Grundlast RG unwirksam.

**Ansprüche**

1. Getakteter Gleichspannungswandler, bei dem die Spannung eines Ausgangs (A1) geregelt wird und eine ungeregelte Spannung an einen zweiten Ausgang (A2) durch Kopplung an ein induktives Speicherelement des Wandlers erzeugt wird,
dadurch gekennzeichnet,
daß ein Schwellenwertdetektor (SD) dann über einen Schalter (S) eine Grundlast (RG) an den Ausgang (A1) mit der geregelten Spannung anlegt, wenn die ungeregelte Spannung eine vorgegebene Schwelle unterschreitet.

2. Getakteter Gleichspannungswandler nach Anspruch 1, dadurch gekennzeichnet, daß der Schwellenwertdetektor aus der Serienschaltung einer Zenerdiode (Z1) und einem ersten Widerstand (R1) besteht, die zwischen die Klemmen gelegt ist, an denen die ungeregelte Spannung anliegt, und daß der Verbindungspunkt der Zenerdiode (Z1) und des ersten Widerstandes (R1) über einen zweiten Widerstand (R2) mit der Basis eines Transistors (T1) verbunden ist, dessen Kollektor-Emitter-Strecke über die Grundlast (RG) die Klemmen des Ausgangs (A1) mit der geregelten Spannung miteinander verbindet.

3. Getakteter Gleichspannungswandler nach Anspruch 1, dadurch gekennzeichnet, daß der Schwellenwertdetektor aus einem Spannungsteiler (R3, R4) besteht, der zwischen die Klemmen gelegt ist, an denen die ungeregelte Spannung anliegt, und dessen Mittenabgriff über eine Zenerdiode (Z2) mit der Basis eines Transistors (T2) verbunden ist und daß die Kollektor-Emitter-Strecke des Transistors (T2) die Klemmen des Ausgangs (A1) mit der geregelten Spannung über die Grundlast (RG) miteinander verbindet.

## Claims

1. A switching DC-DC converter, in which the voltage of an output (A1) is controlled and a non-controlled voltage is produced on a second output (A2) by coupling to an inductive storage element of the converter, characterized in that a threshold value detector (SD) connects, via a switch (S), a base load (RG) to the output (A1) carrying the controlled voltage whenever the non-controlled voltage drops below a given threshold.

2. A switching DC-DC converter as claimed in Claim 1, characterized in that the threshold value detector comprises the seriesconnection of a zener diode (Z1) and a first resistance (R1) which is arranged between the terminals carrying the non-controlled voltage, and in that the junction of the zener diode (Z1) and the first resistance (R1) is connected, via a second resistance (R2), to the base of a transistor (T1) whose collector-emitter path interconnects, via the base load (RG), the terminals of the output (A1) carrying the contolled voltage.

3. A switching DC-DC converter as claimed in Claim 1, characterized in that the threshold value detector comprises a voltage divider (R3, R4) which is arranged between the terminals carrying the non-controlled voltage and whose central tapping is connected, via a zener diode (Z2), to the base of a transistor (T2), and in that the collector-emitter path of the transistor (T2) interconnects, via the base load (RG), the terminals of the output (A1) carrying the controlled voltage.

## Revendications

1. Convertisseur de courant continu à découpage, dans lequel la tension d'une sortie (A1) est réglée et une tension non réglée est produite à une deuxième sortie (A2) par couplage à un élément de stockage inductif du convertisseur, caractérisé en ce qu'un détecteur de valeur de seuil (SD) applique une charge de base (RG) à la sortie (A1) présentant la tension réglée par l'intermédiaire d'un commutateur (S), lorsque la tension non réglée devient inférieure à un seuil prédéfini.

2. Convertisseur de courant continu à découpage suivant la revendication 1, caractérisé en ce que le détecteur de valeur de seuil consiste en un montage en série d'une diode Zener (Z1) et d'une première résistance (R1) se trouvant entre les bornes auxquelles la tension non réglée est présente, et que le point de jonction de la diode Zener (Z1) et de la première résistance (R1) est connecté, par l'intermédiaire d'une deuxième résistance (R2), à la base d'un transistor (T1), dont le trajet de collecteur-émetteur connecte les bornes de la sortie (A1), portant la tension réglée, l'une à l'autre par l'intermédiaire de la charge de base (RG).

3. Convertisseur de courant continu à découpage suivant la revendication 1, caractérisé en ce que le détecteur de valeur de seuil consiste en un diviseur de tension (R3, R4), qui est monté entre les bornes auxquelles la tension non réglée est présente et dont la prise médiane est connectée, par l'intermédiaire d'une diode Zener (Z2), à la base d'un transistor (T2), et que le trajet de collecteur-émetteur du transistor (T2) connecte les bornes de la sortie (A1), portant la tension réglée, l'une à l'autre par l'intermédiaire de la charge de base (RG).

FIG.1

FIG. 2

FIG. 3